(19)

**Europäisches Patentamt**
**European Patent Office**
**Office européen des brevets**

(11) **EP 4 064 577 B1**

(12) **EUROPEAN PATENT SPECIFICATION**

(45) Date of publication and mention
of the grant of the patent:
**20.08.2025 Bulletin 2025/34**

(21) Application number: **22164580.7**

(22) Date of filing: **25.03.2022**

(51) International Patent Classification (IPC):
***H04B 1/69*** *(2011.01)*

(52) Cooperative Patent Classification (CPC):
**H04B 1/69; H04B 2001/6912**

(54) **METHOD FOR MODULATING AND DEMODULATING A DATA STREAM USING UP-CHIRPS AND DOWN-CHIRPS**

VERFAHREN ZUR MODULATION UND DEMODULATION EINES DATENSTROMS MIT AUFWÄRTS- UND ABWÄRTS-CHIRPS

PROCÉDÉ DE MODULATION ET DE DÉMODULATION D'UN FLUX DE DONNÉES UTILISANT DES CHIRPS MONTANTS ET DESCENDANTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.03.2021 IT 202100007325**

(43) Date of publication of application:
**28.09.2022 Bulletin 2022/39**

(73) Proprietor: **STUDIO TECNICO M. MARTIN, M. BONAVENTURA E F. ARU INGEGNERI**
**35030 Galzignano Terme (PD) (IT)**

(72) Inventors:
• **BONAVENTURA, Marco**
**30174 MESTRE (VE) (IT)**
• **MARTIN, Massimo**
**35030 GALZIGNANO TERME (PD) (IT)**
• **ARU, Francesco**
**31030 CASTELLO DI GODEGO (TV) (IT)**

(74) Representative: **Marchioro, Paolo**
**Studio Bonini S.r.l.**
**Corso Fogazzaro, 8**
**36100 Vicenza (IT)**

(56) References cited:
US-A- 4 481 640        US-B1- 10 530 628
US-B2- 10 955 547        US-B2- 8 406 275

• **TONG SHUAI ET AL: "CoLoRa: Enabling Multi-Packet Reception in LoRa", IEEE INFOCOM 2020 - IEEE CONFERENCE ON COMPUTER COMMUNICATIONS, IEEE, 6 July 2020 (2020-07-06), pages 2303 - 2311, XP033806648, DOI: 10.1109/INFOCOM41043.2020.9155509**
• **DHAM VIVEK: "Programming Chirp Parameters in TI Radar Devices", TEXAS INSTRUMENTS-APPLICATION REPORT SWRA553, 1 May 2017 (2017-05-01), XP055739510, Retrieved from the Internet <URL:https://www.ti.com/lit/an/swra553a/swra553a.pdf?ts=1710121126389&ref_url=https%253A%252F%252Fwww.google.com%252F> [retrieved on 20201013]**
• **LIM HAE-SEUNG ET AL: "Lane-by-Lane Traffic Monitoring Using 24.1 GHz FMCW Radar System", IEEE ACCESS, IEEE, USA, vol. 9, 19 January 2021 (2021-01-19), pages 14677 - 14687, XP011832668, DOI: 10.1109/ACCESS.2021.3052876**

**Description**

The present invention relates to a method for modulating and demodulating a data stream, for transceiving it by means of a transmission signal.

In particular, such a modulation and demodulation method is particularly suitable for allowing the transmission of the aforesaid data stream in space or satellite-to-ground communication scenarios and vice versa.

In fact, it is well known that these communication scenarios are generally characterized by a high doppler level (due to high relative speed), a high doppler rate (especially at a low earth orbit of a satellite relative to the earth) and high attenuation due to long distances in free space.

To date, there are a number of alternative solutions for implementing these types of communication scenarios, each of which has some drawbacks.

The main signal transmission techniques available on the market, for the aforesaid communications scenario, are the solutions known as NBIoT, LoRa (LoRaWAN), LoRa-E and Sigfox.

Each of them is proprietary and all, except for LoRa, are of the type so called in the jargon "narrowband".

Among all, the LoRa modulation technique is an interesting solution as it is a solution that is called in technical jargon "Chirp Spread-Spectrum" and uses a modulator/demodulator transceiver device made up of components that are readily available on the low-cost market.

However, even this technique, although it seems to be one of the most interesting for the implementation of space-to-earth or space communications, has some important drawbacks.

First and foremost, the LoRa spread-spectrum modulation (LoRa) technique is designed for environments with reduced frequency offset and limited doppler rate.

In fact, this LoRa modulation technique has been developed mainly for terrestrial environments (with low mobility). Consequently, in the case of a high doppler rate, the reliability of extracting information from the transmission signal could be somewhat reduced.

Frequency Hop Spread Spectrum modulation techniques have the disadvantage of a significant inability to mitigate band interferences, resulting in unreliable communication.

Basically, except for the FHSS mechanism, modulation is completely non-resilient to alien interferences. The same can be said about self-interference: in case of collision of packets, their information would be lost.

Even more in detail, with regard to the LoRa modulation technique, by its nature, disadvantageously, by providing that the transmitted information takes the form of a frequency offset with respect to the up-chirp, any Doppler effects on the received signal heavily influence the possibility of correctly demodulating the received signal.

Furthermore, still disadvantageously, with the LoRa technique it is not possible to determine and compensate separately for any frequency offset, due for example to the aforesaid doppler effects, due to misalignments over time of the originally transmitted symbol.

For this reason LoRa introduces down-chirp symbols in the synchronisation preamble.

In other words, using the LoRa modulation technique, a misalignment over time and a frequency offset both result in the same type of transformation in the time-frequency characteristic. Again, horizontal and vertical shifts are somehow equivalent and cannot be distinguished.

US 8,406,275 B2 discloses a communications system that includes a modulator for generating a chirp signal aiming at spreading the frequency spectrum of an information signal over a specified spectral bandwidth of a communications channel. If only one chirp of information is transported by each chirp symbol, an up-chirp and a down-chirp are respectively used to carry a 1 and a 0, or vice versa. US 10,955,547 B2 discloses a system for performing combined radar and communications functions, wherein each symbol is of length 2T and has two chirps, one up-chirp followed by one down-chirp. Alternatively but not additionally, each symbol may have one down-chip followed by one up-chirp.

The present invention aims to overcome all the limitations and drawbacks indicated.

In particular, it is an object of the invention to propose a modulation and demodulation method which makes it possible to make the extraction of the information, transmitted by means of a modulated transmission signal, immune to possible frequency shifts due to doppler effects or any other physical phenomenon which can be the origin of such frequency shifts during transmission.

Another object of the invention is to propose a modulation and demodulation method that allows to discriminate and compensate in a totally independent way for the frequency shifts of the signal and the misalignments over time of the transmitted symbol.

It is also the object of the invention to propose a modulation and demodulation method that can be implemented by means of a cheap transceiver available on the market.

Furthermore, it is an object of the invention to propose a modulation and demodulation method that allows the demodulation of the received transmission signal to be implemented using low-cost components.

The aforesaid purposes, together with the advantages which will be mentioned below, will be highlighted during the description of some preferred embodiments of the invention which are given, by way of non-limiting example, with reference to the attached drawings, where:

- Fig. 1 shows a transmission signal obtained with the modulation method of the invention;
- Fig. 2 shows a first example of a symbol obtainable with the modulation method of the invention;
- Fig. 3 shows a second example of a symbol obtainable with the modulation method of the invention;
- Fig. 4 shows a third example of a symbol obtainable with the modulation method of the invention;
- Fig. 5 shows a fourth example of a symbol obtainable with the modulation method of the invention;
- Fig. 6 shows an example of alphabet of symbols obtainable with the modulation method of the invention;
- Fig. 7 shows the block diagram of a first demodulation method of the invention;
- Fig. 8 shows a comparison block used by the demodulation methods of the invention;
- Fig. 9 shows the block diagram of a second demodulation method of the invention;
- Fig. 10 shows the block diagram of a method of the invention for determining the CFO of the symbol to be demodulated;
- Fig. 11 shows the block diagram of a method of the invention for determining the STO of the symbol to be demodulated;
- Fig. 12 shows an example of an expanded constellation of symbols obtainable with a modulation method of the invention;
- Fig. 13 shows the block diagram of a third demodulation method for expanded constellation of the invention.

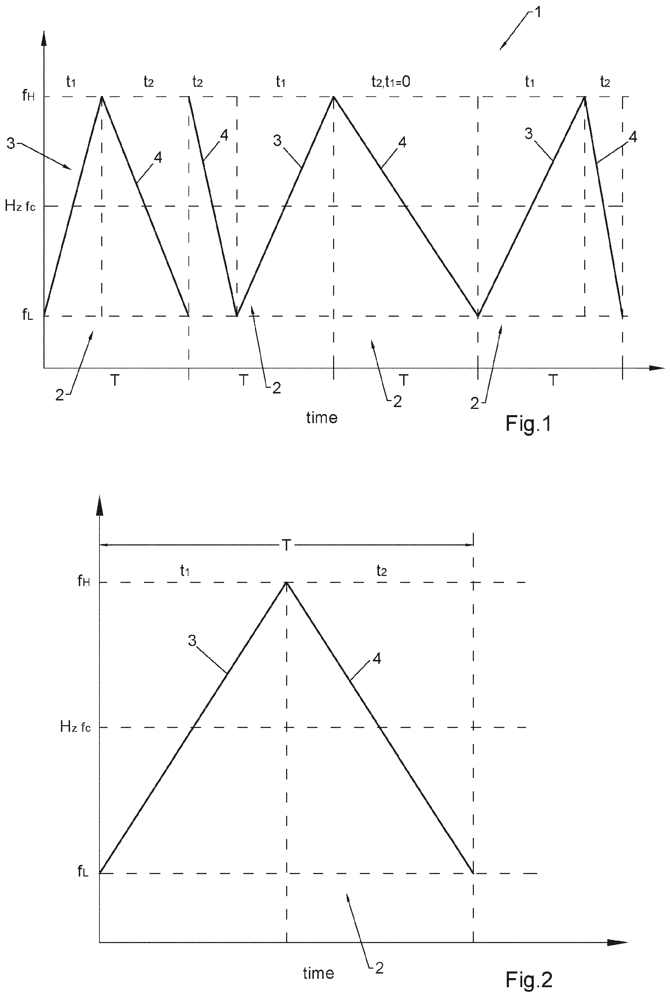

The method of the invention relates to a technique for modulating and demodulating a data stream, for transmitting the aforesaid data stream as a transmission signal, shown in Fig. 1 as 1, by means of radiated wave transmission means.

In particular, the use of such a method of the invention is particularly suitable for transmitting a data stream in space or satellite communication scenarios to and from the earth, the latter being characterized by a high doppler level (due to the high relative speed), by a high doppler rate (especially at a low earth orbit of a satellite relative to the earth) and by a high attenuation due to long distances in free space.

Preferably, the proposed modulation and demodulation method is known in technical jargon as "Spread-Spectrum (SS) modulation" method. Advantageously, this feature allows implementing a correct demodulation of the transceived signal, possibly even in the presence of high noise levels.

In particular, such a data stream is defined by a plurality of bits of a number multiple of a predefined number Nb of bits.

According to the invention, in order to render the transmission of the data stream substantially immune to adverse physical phenomena, as will be specified below, the new modulation method provides for dividing the plurality of bits defining said data stream into one or more consecutive or non-consecutive portions of bits, each comprising a number Nb of unique bits with respect to the remaining portions of bits, wherein Nb is selected at least equal to 2 bits.

Each of these portions of bits defines an information code comprised in a set of information codes having a number equal to $2^{Nb}$, as will be specified in the implementation example below.

The modulation method also provides for defining a sequence of consecutive symbols **2**, defining the aforesaid transmission signal **1**, having the same duration interval T, wherein each symbol **2** represents a portion of Nb bits of the data stream to be transmitted, i.e. each symbol **2** represents one of the aforesaid information codes.

In particular, each of said consecutive symbols **2** of said sequence of consecutive symbols **2** belonging to the transmission signal **1** is independent of the symbol **2** preceding it and of the symbol **2** following it.

This means, in other words, that the transmission signal **1** of the invention does not necessarily have to be a continuous form signal, and therefore by definition with the method of the invention it is possible to modulate consecutive symbols **2** of different waveforms (e.g. up-chirp/down-chirp followed by down-chirp/up-chirp) and of discontinuous type (pure up-chirp or pure down-chirp).

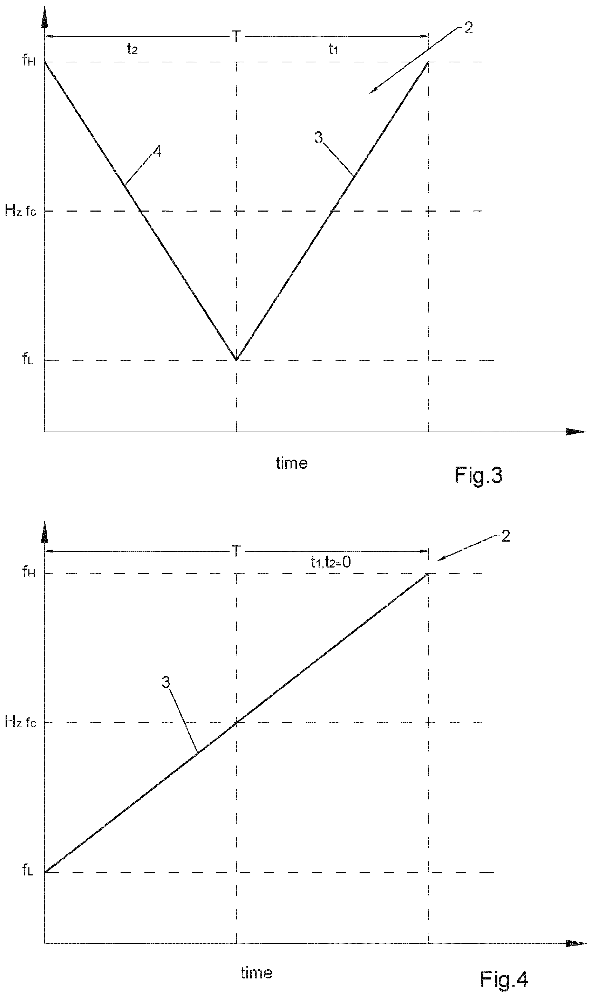

Each of the symbols **2** is defined by the combination of an up-chirp signal **3** of duration t1, followed by a down-chirp signal **4** of duration t2, as represented in Fig. 2, or, vice versa, by the combination of a down-chirp signal **4** of duration t2, followed by an up-chirp signal **3** of duration t1, as represented in Fig. 3, wherein, for each symbol **2,** the sum of the duration t1 and of the duration t2 is always equal to the aforesaid duration interval T.

Furthermore, according to the invention, the unique association between each information code belonging to said set of information codes having a number equal to $2^{Nb}$ and a specific symbol **2** is determined a priori, by selecting for that symbol **2** one of the two combinations presented above, i.e. up-chirp **3**/ down-chirp **4** or, alternatively, down-chirp **4**/up-chirp **3**, and also a specific ratio between the duration t1 and the duration T of each symbol **2**. In other words, this last characteristic can also be expressed as the duty cycle value, i.e. the value of the duration, for example t1, with respect to the entire duration interval T, always taking into account that t1+t2 is always equal to T. In other words, the sum of the two durations t1 and t2 is always constant.

Preferably, the value of the duration t1 of the up-chirp signal **3,** according to the invention, can vary in the interval [0:T] and, consequently, the value of the duration t2 is determined such that t2 = T - t1, i.e. it too can vary in the interval [0:T].

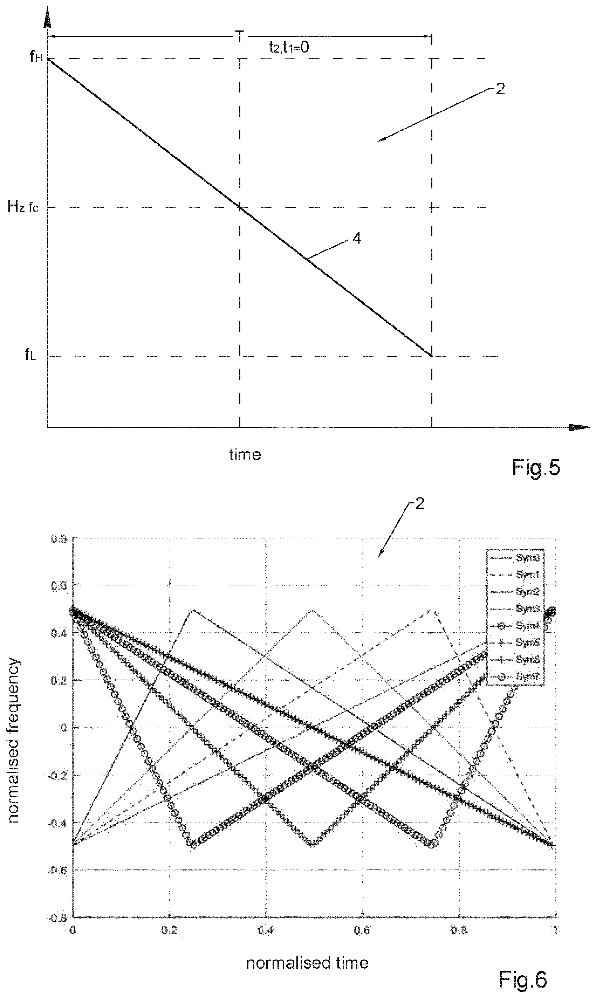

From this, it can be deduced that in the alphabet, or set, of the symbols **2** provided by the method of the invention, the two end symbols composed respectively of a pure up-chirp signal, i.e. with duration t1 equal to the entire interval T, as represented in Fig. 4, or, conversely, of a pure down-chirp signal, i.e. with duration t2 equal to the entire interval T, as represented in Fig. 5, are also included.

With regard to the unique association between each specific symbol **2,** belonging to an alphabet of symbols **2,** and one of the information codes belonging to said set of information codes having a number equal to $2^{Nb}$, as mentioned above, it is determined a priori, that is, during the definition phase of the modulation and demodulation method of the invention, prior to its implementation, and this association is made available to the transceiver configured to implement the modulation and demodulation method of the invention.

The basic concept of this type of modulation consists in the fact that the baseband representation of a signal is a complex exponential function whose phase is continuous and whose amplitude is constant. The function representing each symbol **2** obtained with the modulation method of the invention is presented hereinafter:

$$s(t) = A \; exp \; (j2 \; \pi \; f_s(t) \; t + \varphi); \qquad (1)$$

The method of the invention clearly provides that the information code represented by each symbol **2** is comprised between a set of information codes having a number equal to $2^{Nb}$.

In particular, preferably, the encoding used for such information codes is the Gray type encoding. This advantageously and evidently makes it possible to associate with neighbouring codes symbols **2** belonging to the transmission signal **1** that are similar between them. In other words, a possible misalignment, a frequency shift or the presence of noise of the received symbol **2** result in the detection of an information code close to the information code actually sent.

It is not excluded, however, that according to different embodiments of the method of the invention the encoding used is a natural type encoding.

For example, the symbol **2** associated a priori to one of the information codes could be defined with one or the other of the two combinations based on the value of one of the bits of said information code, for example the most significant bit, while the duration of t1 or t2 is selected equal to $t = k*T/2^{Nb-1}$ with $k = 0, 1, ..., 2^{Nb-1}-1$, wherein the value of k is determined by the values of the Nb-1 bits of the same information code, distinct from the aforesaid bit used for selecting one of the two combinations.

With respect to the up-chirp signal **3** of each symbol **2,** it is a signal whose frequency is linearly increasing from a minimum frequency value $f_L$ to a maximum frequency value $f_H$ within the predefined bandwidth BW, equally spaced from the central frequency $f_C$ of the aforesaid bandwidth BW, whereas with regard to the down-chirp signal **4** of each symbol **2,** it is a signal whose frequency is linearly decreasing from the aforesaid maximum frequency value $f_H$ to the minimum frequency value $f_L$.

In order to conclude the description of the main characteristics of the modulation and demodulation method of the invention discussed so far, an example of the symbols **2** belonging to an alphabet, or set, of symbols defined according to the modulation method of the invention is presented in Fig. 6, by selecting the value Nb equal to 3 bits, wherein the central frequency $f_C$ of the band BW is selected equal to 0, the bandwidth BW is normalised to 1 (therefore the frequency range goes from [-0.5 to 0.5]), and the duration interval **T** of each symbol is normalised to 1, and, furthermore, wherein the information codes are encoded according to a Gray encoding.

Since, in the case of the method of the invention, the information to be transmitted is encoded on the basis of the aforesaid ratio between the duration t1 of the up-chirp signal **3** and the duration of the interval **T,** as well as on the basis of the selection of the order between the aforesaid two signals, and, conversely, such information is not encoded on the basis of the frequency shift, as is the case for the LoRa technique, advantageously, with the same method of the invention it is possible to obtain two important benefits:

- the information transmitted by means of a transmission signal **1** modulated with this innovative technique proposed herein is immune to possible frequency shifts due to doppler effects or to any other physical phenomenon that causes such shifts during transmission;
- it is possible to discriminate and compensate fully independently for the frequency shifts of the transmission signal **1** and the misalignments over time of the transmitted symbol.

In particular, with regard to the latter important aspect, the modulation method of the invention allows us to consider two further aspects.

On the one hand, the method of the invention makes it possible to discriminate and compensate independently of each other, the possible frequency shifts of the signal (CFO - Carrier Frequency Offset) and the misalignment over time of the symbol (STO - Symbol Timing Offset), preferably with the technique described below.

Moreover, on the other hand, such a peculiar feature of the modulation method of the invention makes it possible to modulate the transmission signal **1,** in addition to the methods described above, also by means of a phase modulation.

In this respect, the modulation method of the invention has an important mathematical property.

Considering that the final phase of each symbol **2** is equal to:

$$\varphi(T) = \varphi(0) + \int_0^T f(t)dt = \varphi(0) + 2\pi fcT; \qquad (2),$$

wherein T is the time duration of the interval of each symbol **2** and $f_C$ is the central frequency of the signal, in case $f_C$ is selected equal to 0, the start and end phase of the symbol **2** correspond.

This feature makes it possible to add a phase modulation of the symbol **2** to be transmitted and this modulation is independent of the frequency modulation, or rather the two modulations can be independently demodulated once the transmitted symbol **2** is received.

This further advantageous feature of the modulation method of the invention makes it possible to add a further piece of information to the transmitted symbol **2,** in addition to the information code defined by selecting the order of the up-chirp **3**/down-chirp **4** signals and the ratio between the duration t1 and the duration of the interval **T.**

Even more in detail, the aforesaid phase modulation could be of the differential type, i.e. the phase variation between two adjacent symbols **2** can be of the absolute type for each single symbol **2.**

A further aspect of the invention relates to the demodulation methodologies identified for optimally or sub-optimally demodulating the transmission signals **1** modulated according to the modulation method of the invention described above.

Incidentally, before starting in detail the description of the aforesaid proposed demodulation methods, it should be noted that such methods could be used, advantageously, also for the demodulation of transmission signals modulated according to modulation techniques dissimilar to the one proposed with the present invention, obtaining however important technical advantages in terms of reduction of the computational complexity for the demodulation of such signals.

For this reason, the demodulation methods proposed below could be the subject-matter of a claim, regardless of the modulation method of the invention described above.

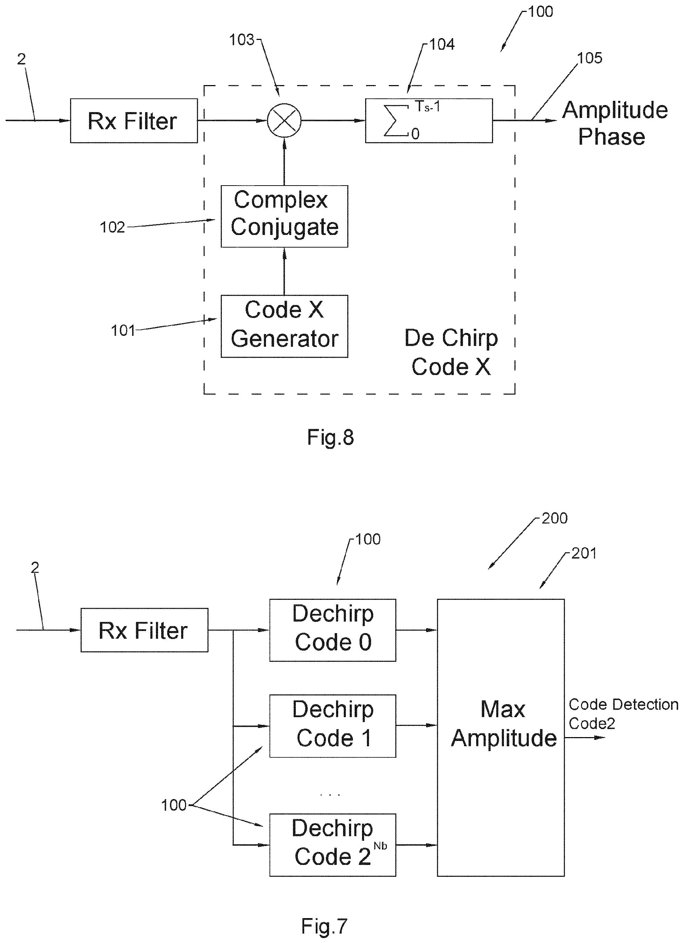

Having said that, a first demodulation method of the invention, which may be defined in technical jargon as "optimal", and its block diagram **200** are represented in Fig. 7.

The basic concept of this method, and consequently of the demodulator configured to implement it, consists, for each symbol **2** received, in carrying out in parallel its comparison with all the possible $2^{Nb}$ receivable input symbols, so as to identify, among all these $2^{Nb}$ receivable symbols, the symbol that has actually been received.

For this purpose, in Fig. 8 the single computational block **100** of comparison is shown, inserted and repeated several times in parallel in block diagram **200** of Fig. 7, so as to be able to perform the aforesaid comparison for each potentially receivable symbol.

In detail, this demodulation method provides, for each symbol **2** to be demodulated, belonging to the received transmission signal **1,** for generating in parallel all the symbols representing all the transmissible information codes $2^{Nb}$. In particular, each of the aforesaid symbols is represented by the equation *(1)* presented above. This generation phase for a single block **100** is represented in Fig. 8 by the block indicated with the number **101.**

At this point, the demodulation method provides for calculating in parallel for each of the symbols generated the conjugate complex, as indicated by block **102** in Fig. 8.

Subsequently, it is provided that the symbol **2** to be demodulated is multiplied in parallel by the conjugate complex of each of said generated symbols, as indicated by block **103.**

In particular, this multiplication operation is implemented for each sample of the symbol **2** received as input, and the results of these operations are summed together within the time window of a symbol, as indicated by the logic block **104** of Fig. 8, in order to obtain an average value of the results of this operation.

At this point, the method provides for determining in parallel, for each of the multiplication operations, the amplitude value of the resulting signal. In the example in Fig. 8, this resulting signal is indicated by **105** at the output from block **104.**

Finally, the first demodulation method of the invention provides for identifying as the symbol **2** to be demodulated the generated symbol which determined the highest amplitude value among all the determined amplitude values. The aforesaid identification phase is represented in Fig. 7 by the logic block indicated by the number **201.**

The logic behind this first demodulation method consists in the fact that, according to signal theory, the product of a complex signal multiplied by its own conjugate complex is equal to a resulting signal with an amplitude equal to the square of the starting signal, while the same signal multiplied by the conjugate complex of a signal offset by the first results in a complex signal with average amplitude definitely lower than the said first product.

The component of the received signal consisting of noise is uncorrelated to the signal, so its energy is reduced and cleaned between the different codes. Therefore, starting from the assumption that the symbol **2** received as input to be demodulated is not known a priori, the product having the highest amplitude value represents the symbol, among all the generated symbols, that has actually been received.

The aforesaid first proposed demodulation method, evidently, has a computational complexity equal to $2^{Nb} \cdot O(\mathbf{100}) = O(2^{Nb} \cdot 2^{Nb}) = O(2^{2Nb})$, wherein $O(\mathbf{100})$ refers to the computational complexity that each block **100** requires.

Finally, as regards this first demodulation method, a receiver configured to implement it can preferably be implemented using FPGA or ASIC technology.

A second demodulation method alternative to the one just proposed, also forming part of the invention, aims at reducing computational complexity, by implementing the identification of the aforesaid symbol received as input through two or more consecutive interactions.

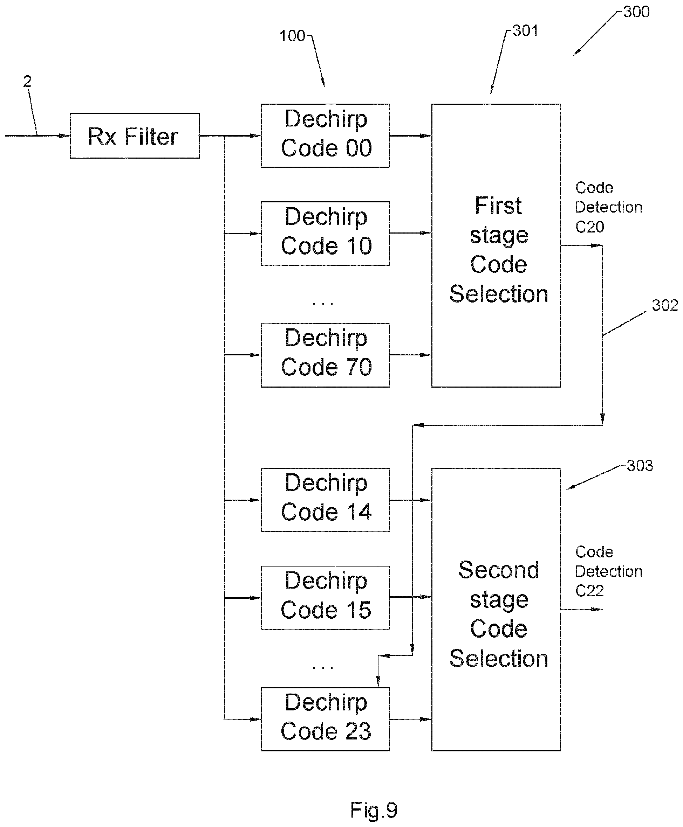

In particular, an example of such a method, whose block diagram **300** is represented in Fig. 9, provides, for each symbol **2** to be demodulated, belonging to the received transmission signal **1,** for dividing the Nb bits that each symbol represents into a first sub-group of Nbps bits, wherein Nbps is selected greater than 0 and less than Nb, and into a second sub-group of Nbms = Nb - Nbps bits, wherein said Nbms bits define $2^{Nbms}$ symbols having a minimum square distance between them.

It should be noted that also in the diagram **300** of Fig. 9 each block **100** represents the block of Fig. 8.

At this point, the aforesaid second method provides for generating in parallel, among all the symbols representing the transmissible information codes $2^{Nb}$, first symbols representing the $2^{Nbps}$ information codes, distinct from each other, by considering and varying only the Nbps bits of the Nb bits of each of said information codes.

Subsequently, the method provides for calculating in parallel for each of these first generated symbols the conjugate complex and provides for multiplying in parallel the symbol **2** to be demodulated by the conjugate complex of each of the first generated symbols.

More precisely, also in this case, such a multiplication operation provides for multiplying each sample of the symbol received as input with the corresponding samples of each first generated symbol and the results of such operations are summed together, as logically indicated by block **104** in Fig. 8, in order to obtain an average value of the results of such a multiplication operation.

Once the parallel multiplication operations have been performed for all the aforesaid $2^{Nbps}$ first symbols generated, the method provides for determining in parallel for each of said multiplication operations the amplitude value of the resulting signal.

Finally, the demodulation method provides for identifying as a probable symbol to be demodulated the symbol among the first generated symbols that determined the highest amplitude value among all the determined amplitude values.

This operation is indicated by logic block **301** in Fig. 9.

Subsequently, a second interaction is performed, represented by arrow **302** in Fig. 9, which provides for generating in parallel second symbols representing all the information codes $2^{Nbms}$ having the Nbps bits corresponding to the probable symbol to be demodulated identified with the first interaction.

The aforesaid generation of the second symbols is implemented, in particular, by considering and varying only the Nbms bits among the Nb bits of each of the information codes.

Also at this second interaction, the method provides for calculating in parallel for each of the second generated symbols the conjugate complex and for performing in parallel the multiplications between the symbol to be demodulated by the conjugate complex of each of the second generated symbols in the manner described above.

Further, the method provides for determining in parallel for each of the multiplication operations the amplitude value of the resulting signal and finally for identifying as symbol **2** to be demodulated the symbol among the second symbols generated that determined the highest amplitude value among all the amplitude values determined.

This operation is indicated by logic block **303** in Fig. 9.

This second demodulation method, unlike the first described above, despite being of the "sub-optimal" type, has the advantage of reducing the computational complexity equal to $(2^{NbPs} + 2^{NbmS}) \cdot O(\mathbf{100})$.

It is not excluded that, as an alternative to dividing the number Nb of bits into two sub-groups, the method may provide for dividing this number of Nb bits into three or more sub-groups and, consequently, provide for three or more successive interactions for the identification of the symbol actually received. Two further demodulation techniques are now discussed, which are performed, according to the invention, following the identification of each of the symbols **2** belonging to the received transmission signal **1,** irrespective of whether this identification is implemented by one or by the other of the two demodulation methods just described.

In particular, the first technique proposed below has the purpose of identifying the possible frequency offset of the received symbol, with respect to the symbol actually sent. In other words, this first technique makes it possible to determine and then compensate for the possible presence of the so-called CFO (Carrier Frequency Offset) present in the symbol received.

The second technique proposed below, on the other hand, aims to identify any time misalignment of the received symbol with respect to the symbol actually sent. In other words, this second technique makes it possible to determine and then compensate for the possible presence of the so-called STO (Symbol Timing Offset) present in the symbol received.

The above two techniques, advantageously, thanks to the nature of the various symbols belonging to the transmission signal **1** received and modulated according to the method of the invention, can be performed in parallel and independently of each other, as any CFOs and STOs are not correlated to each other.

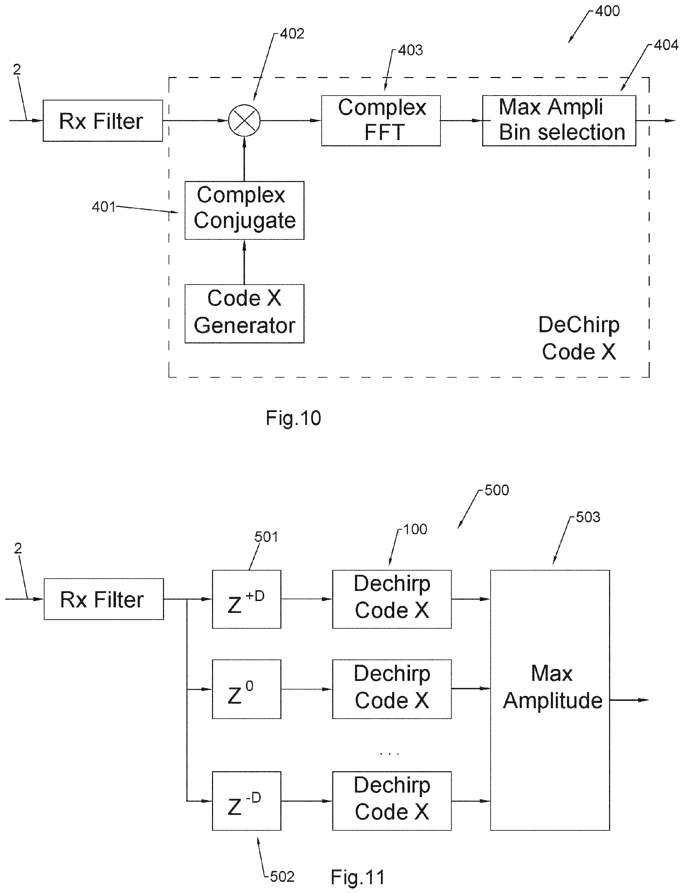

With regard to the technique for determining the CFO, as can be observed in block diagram **400** of Fig. 10, it provides, for each symbol **2** to be demodulated, belonging to the received transmission signal **1,** for multiplying the aforesaid symbol (logic block **402**) by the conjugate complex of the identified symbol, calculated by means of logic block **401,** for calculating the FFT (Fast Fourier Transformation) of the result of said multiplication, by means of block **403,** and for analysing the result of the FFT in order to identify the frequency bin with maximum amplitude, by means of block **404.**

The aforesaid frequency bin with maximum amplitude identified corresponds to the frequency offset of the symbol to be demodulated.

Clearly, if the symbol to be demodulated had no offset, the result of the aforesaid FFT would correspond to a constant, known in technical jargon as BIN0, i.e. the *dc* component of the FFT calculation, whereas if there were a frequency offset, the result of this FFT would be a sinusoid whose frequency would correspond to this offset.

The second technique for determining the time misalignment of the symbol, as schematically shown in block diagram **500** in Fig. 11, for each symbol to be demodulated belonging to the transmission signal **1,** provides for obtaining one or more symbols delayed with respect to said symbol **2** to be demodulated by applying to the latter time delays that are distinct from each other. In the example of Fig. 11, there is a single logic block **501** that applies the aforesaid delay.

In addition, this technique also optionally provides for obtaining one or more symbols (logically) in advance with respect to the same symbol **2** to be demodulated, by applying to the latter time advances that are distinct from each other. In Fig. 11 a single logic block **502** is represented which applies this advance.

Subsequently, the aforesaid second technique provides for multiplying the symbol to be demodulated, each of the delayed symbols and, optionally, each of the symbols in advance by the conjugate complex of the symbol previously identified by one of the two methods described above.

In Fig. 11, these parallel operations are performed using logic blocks **100** of Fig. 8.

Once these multiplications have been carried out, the amplitude value of the resulting signal is determined for each of the multiplication operations.

Finally, by using logic block **503,** the time misalignment of the symbol to be decoded is identified, based on which signal resulting from the multiplications has the highest amplitude value.

In addition, a third demodulation method, alternative to the two described above, for identifying the symbol to be demodulated is presented below.

This third method aims to further reduce the computational complexity for the identification of the aforesaid symbol to be demodulated.

The basic principle of the aforesaid third demodulation method is to define a limited alphabet, or set, of symbols having a number equal to $2^{Nb}$, for example four symbols. In the latter case, each symbol is the representation of 2 information bits (Nb=2).

From such a symbol base $2^{Nb}$, the method provides for creating an extended constellation of symbols by introducing a frequency offset for example equal to $k*BW/2^{BA}$, with $k=0,1, ..., 2^{BA}-1$, where BW denotes the bandwidth and BA denotes the additional bits to the Nb of the basic symbols and is selected greater than or equal to 1.

The operation of summing the frequency offset is performed by subtracting n*BW from the symbol, wherein n belongs to the integers, so that the frequency of the symbol is for each time instant within the interval of said frequency band BW.

By way of example, if one were to define as four basic symbols:

- the symbol defined as 50% up-chirp-50% down-chirp;
- the symbol defined as 50% down-chirp-50% up-chirp;
- the symbol defined by the pure up-chirp signal;
- the symbol defined by the pure down-chirp signal,

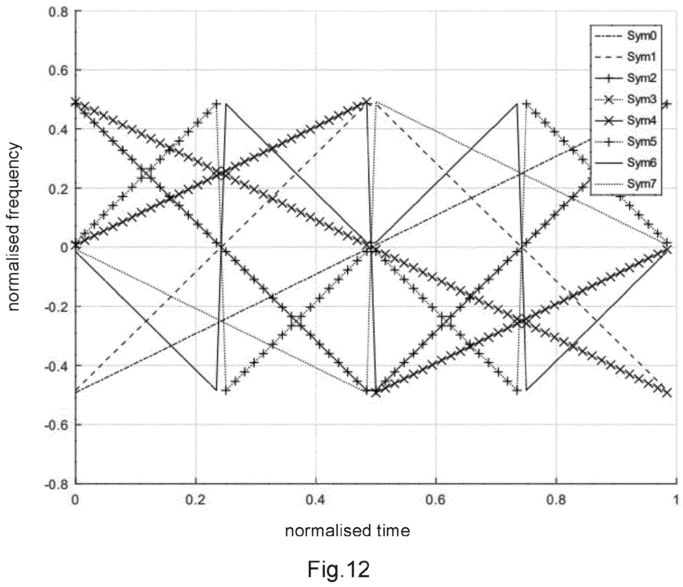

and setting BA equal to 1, the expanded constellation would consist of eight symbols, the trends of which are represented in Fig. 12.

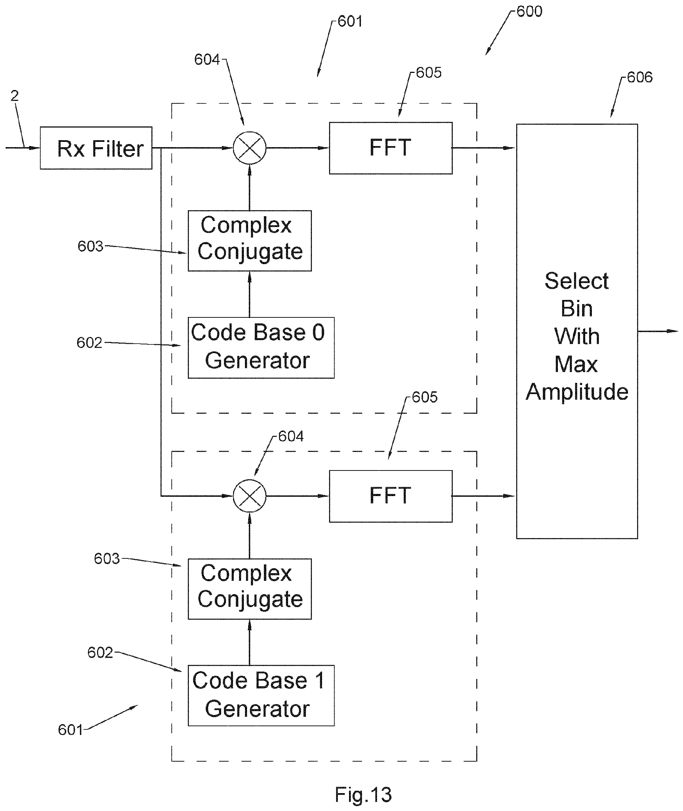

Having said that, the aforesaid third method for identifying the symbol to be demodulated, of which a representation of the block diagram **600** is represented in Fig. 13, is based on the frequency analysis of the aforesaid symbol to be demodulated in relation to each of the symbols belonging to the aforesaid expanded constellation. For simplicity's sake, only two logic blocks of comparison **601** are represented in the example of Fig. 13. Clearly, the number of such logic blocks of comparison **601** must be equal to the number $2^{Nb+BA}$ of symbols belonging to the aforesaid expanded constellation.

In other words, more specifically, this demodulation method provides first of all, for each symbol **2** to be demodulated, belonging to the received transmission signal **1,** for generating in parallel all the symbols representing all the $2^{Nb+BA}$ information codes belonging to the aforesaid expanded constellation, as indicated by the logic blocks **602** of Fig. 13.

For each of the aforesaid $2^{Nb+BA}$ symbols generated, the method provides for calculating in parallel the conjugate complex (logic block **603**) and for multiplying in parallel the symbol to be demodulated by the conjugate complex of each of said generated symbols, using logic block **604.**

The third method, subsequently, provides for calculating in parallel, using logic block **605** of Fig. 3, the FFT of the result of each of the multiplications and for analysing in parallel the results of the FFTs, so as to identify the frequency bin with maximum amplitude for each of the FFT analyses.

Finally, the method provides for a first operation of identification of the FFT analysis that presents, among all the FFT analyses, the frequency bin with greater amplitude and subsequently for identifying as a symbol to be demodulated the generated symbol that determined the frequency bin with greater amplitude, among all the amplitudes of the frequency bin of all FFT analyses. The latter operations are carried out by means of the logic block indicated by **606** in Fig. 13.

Advantageously, as mentioned above, this third method, compared to the first two methods described above, allows to significantly reduce the computational complexity equal to $2^{Nb} \cdot (2^{Nb} + 2^{BA} \cdot BA)$.

Based on the foregoing, therefore, the modulation and demodulation method of the present invention achieves all the predetermined aims.

In particular, the aim of proposing a modulation and demodulation method that makes it possible to render the extraction of the information transmitted by means of a transmission signal immune to any frequency shifts due to doppler effects or any other physical phenomenon causing such shifts during transmission is achieved.

Another aim achieved by the invention is to propose a modulation and demodulation method that allows to discriminate and compensate in a totally independent way for the frequency shifts of the signal and for the misalignments over time of the symbol transmitted.

The aim of proposing a modulation and demodulation method that can be implemented by means of a cheap transceiver available on the market is also achieved.

Finally, the aim of proposing a modulation and demodulation method that allows implementing the demodulation of the received transmission signal, using low-cost components, is also achieved.

**Claims**

1. Method for modulating a data stream defined by a plurality of bits of a number multiple of a predefined number Nb, for transmitting said data stream by means of a transmission signal (1), **characterized in that** said modulation provides for:

   - dividing said plurality of bits of said data stream into one or more consecutive or non-consecutive portions of bits, each comprising a number Nb of bits, unique with respect to the remaining portions of bits, wherein Nb is selected to be at least equal to 2 bits, each of said portions of bits defining an information code comprised in a set of information codes having a number equal to $2^{Nb}$;
   - generating said transmission signal (1) as a sequence of consecutive symbols (2), each symbol (2) representing one of said information codes, said symbols (2) having a same duration interval T, each of said symbols (2) being defined by one of $2^{Nb-1}$ combinations of an up-chirp signal (3) of duration t1 followed by a down-chirp signal (4) of duration t2 or, vice versa, by one of $2^{Nb-1}$ combinations of a down-chirp signal (4) of duration t2 followed by an up-chirp signal (3) of said duration t1, and wherein, for each symbol (2), the sum of said duration t1 and said duration t2 is always equal to said duration interval T, the unique association between each information code belonging to said set of information codes and a specific symbol (2) being determined a priori, by selecting for said symbol one of said two combinations and a specific ratio between said duration t1 and said duration interval T, wherein each symbol (2) of said sequence of consecutive symbols (2) of said transmission signal (1) is independent of the symbols (2) preceding it and of the symbols (2) following it.

2. Method for modulating according to claim 1, **characterized in that** said duration t1 can vary in the interval [0;T] and said duration t2 is selected so that t2 = T - t1.

3. Method for modulating according to any one of the preceding claims, **characterized in that** the symbol (2) uniquely associated a priori to one of said information codes is defined with one or the other of the two combinations based on the value of one of the bits of said information code and the value of said duration t1 or of said duration t2 is selected equal to $t = k*T/2^{Nb-1}$ with $k=0,1, ..., 2^{Nb-1}-1$, wherein the value of k is determined by the values of the Nb-1 bits of the aforesaid information code, which are distinct from said bit used for selecting one of said two combinations.

4. Method for modulating according to any one of the preceding claims, **characterized in that** said information codes are coded according to Gray encoding.

5. Method for modulating according to any one of the preceding claims, **characterized in that,** for each of said symbols (2):

   - said up-chirp signal (3) is a signal whose frequency is linearly increasing from a minimum frequency value ($f_L$) to a maximum frequency value ($f_H$) of a predefined bandwidth (BW);
   - said down-chirp signal (4) is a signal whose frequency is linearly decreasing from said maximum frequency value ($f_H$) to said minimum frequency value ($f_L$) of said predefined bandwidth (BW).

6. Method for modulating according to any one of the preceding claims, **characterized in that** said modulation provides for performing a phase modulation of one or more of said symbols (2).

7. Method for modulating according to any one of the preceding claims, **characterized in that** said modulation, starting from a set of basic symbols of said symbols (2), each representing one of said information codes belonging to said set of information codes $2^{Nb}$, provides for creating an extended constellation of symbols of said symbols (2), introducing a frequency offset, preferably equal to $k*BW/2^{BA}$, with k=0,1,..., $2^{BA}$-1, wherein BW indicates the bandwidth, while BA indicates the additional bits with respect to the Nb bits of the basic symbols (2), and wherein BA is selected greater than or equal to 1; wherein the operation of summing said frequency offset takes place by subtracting n*BW with n belonging to integers, so that the frequency is for each time instant within the interval of said frequency band BW.

8. Method for demodulating a transmission signal (1), **characterized in that** said transmission signal (1) is generated as a sequence of consecutive symbols (2), each symbol (2) representing one portion of bits of one or more consecutive or non-consecutive portions of bits in which a plurality of bits of a data stream is divided, each one of said portions of bits comprising a number Nb of bits, unique with respect to the remaining portions of bits, wherein Nb is selected to be at least equal to 2 bits, each of said portions of bits defining an information code comprised in a set of information codes having a number equal to $2^{Nb}$; said symbols (2) having a same duration interval T, each of said symbols (2) being defined by one of $2^{Nb-1}$ combinations of an up-chirp signal (3) of duration t1 followed by a down-chirp signal (4) of duration t2 or, vice versa, by one of $2^{Nb-1}$ combinations of a down-chirp signal (4) of duration t2 followed by an up-chirp signal (3) of said duration t1, and wherein, for each symbol (2), the sum of said duration t1 and said duration t2 is always equal to said duration interval T, the unique association between each information code belonging to said set of information codes and a specific symbol (2) being determined a priori, by selecting for said symbol one of said two combinations and a specific ratio between said duration t1 and said duration interval T, wherein each symbol (2) of said sequence of consecutive symbols (2) of said transmission signal (1) is independent of the symbols (2) preceding it and of the symbols (2) following it; wherein said demodulation provides, for each symbol (2) to be demodulated, belonging to said transmission signal (1), for:

   - generating in parallel all the symbols representing all said transmissible information codes $2^{Nb}$;
   - calculating in parallel for each of said generated symbols the conjugate complex;
   - multiplying in parallel said symbol (2) to be demodulated by said conjugate complex of each of said generated symbols;
   - determining in parallel for each of said multiplication operations the amplitude value of the resulting signal;
   - identifying as a symbol (2) to be demodulated the generated symbol which determined the highest amplitude value among all the determined amplitude values.

9. Method for demodulating a transmission signal (1), **characterized in that** said transmission signal (1) is generated as a sequence of consecutive symbols (2), each symbol (2) representing one portion of bits of one or more consecutive or non-consecutive portions of bits in which a plurality of bits of a data stream is divided, each one of said portions of bits comprising a number Nb of bits, unique with respect to the remaining portions of bits, wherein Nb is selected to be at least equal to 2 bits, each of said portions of bits defining an information code comprised in a set of information codes having a number equal to $2^{Nb}$; said symbols (2) having a same duration interval T, each of said symbols (2) being defined by one of $2^{Nb-1}$ combinations of an up-chirp signal (3) of duration t1 followed by a down-chirp signal (4) of duration t2 or, vice versa, by one of $2^{Nb-1}$ combinations of a down-chirp signal (4) of duration t2 followed by an up-chirp signal (3) of said duration t1, and wherein, for each symbol (2), the sum of said duration t1 and said duration t2 is always equal to said duration interval T, the unique association between each information code belonging to said set of information codes and a specific symbol (2) being determined a priori, by selecting for said symbol one of said two combinations and a specific ratio between said duration t1 and said duration interval T, wherein each symbol (2) of said sequence of consecutive symbols (2) of said transmission signal (1) is independent of the symbols (2) preceding it and of the symbols (2) following it; wherein said demodulation, for each symbol (2) to be demodulated, belonging to said transmission signal (1), provides for dividing said Nb bits into at least a first sub-group of Nbps bits, wherein Nbps is selected greater than 0 and less than Nb, and a second sub-group of Nbms = Nb - Nbps bits, wherein said Nbms bits define $2^{Nbms}$ symbols having a minimum square distance between them, said demodulation also providing for:

- generating in parallel, among all the symbols representing said transmissible information codes $2^{Nb}$, first symbols representing the $2^{Nbps}$ information codes distinct from each other, considering and varying only the Nbps bits of said Nb bits of each of said information codes;
- calculating in parallel for each of said first generated symbols the conjugate complex;
- multiplying in parallel said symbol (2) to be demodulated by said conjugate complex of each of said first generated symbols;
- determining in parallel for each of said multiplication operations the amplitude value of the resulting signal;
- identifying as a probable symbol (2) to be demodulated the symbol among said first generated symbols which determined the highest amplitude value among all the determined amplitude values;
- generating in parallel second symbols representing all the information codes $2^{Nbms}$ having the Nbps bits corresponding to said probable symbol (2) to be demodulated, said generation of said second symbols being carried out considering and varying only the Nbms bits among said Nb bits of each of said information codes;
- calculating in parallel for each of said second generated symbols the conjugate complex;
- multiplying in parallel said symbol (2) to be demodulated by said conjugate complex of each of said second generated symbols;
- determining in parallel for each of said multiplication operations the amplitude value of the resulting signal;
- identifying as a symbol (2) to be demodulated the symbol among said second generated symbols which determined the highest amplitude value among all the determined amplitude values.

10. Method according to any one of claims 8 or 9, **characterized in that** said demodulation, for each symbol (2) to be demodulated, belonging to said transmission signal (1), provides, for said symbol identified as a transmitted symbol, among said generated symbols, for:

- multiplying said symbol (2) to be demodulated by the conjugate complex of said identified symbol;
- calculating the FFT of the result of said multiplication;
- analysing the result of said FFT in order to identify the frequency bin with maximum amplitude;
- considering the frequency of said identified bin as the frequency offset of said symbol (2) to be demodulated.

11. Method according to any one of claims 8 to 10, **characterized in that** said demodulation, for each symbol (2) to be demodulated, belonging to said transmission signal (1), provides, for said symbol identified as a transmitted symbol, among said generated symbols, for:

- obtaining at least one symbol delayed with respect to said symbol (2) to be demodulated by applying a time delay;
- multiplying each of said symbol (2) to be demodulated and of said delayed symbol by the conjugate complex of said identified symbol;
- determining for each of said multiplication operations the amplitude value of the resulting signal;
- identifying the offset over time of said symbol (2) to be demodulated on the basis of which signal resulting from said multiplications has the highest amplitude value.

12. Method for demodulating a transmission signal (1), **characterized in that** said transmission signal (1) is generated as a sequence of consecutive symbols (2), each symbol (2) representing one portion of bits of one or more consecutive or non-consecutive portions of bits in which a plurality of bits of a data stream is divided, each one of said portions of bits comprising a number Nb + BA of bits, unique with respect to the remaining portions of bits, wherein Nb is selected to be at least equal to 2 bits and wherein BA is selected greater than or equal to 1, each of said portions of bits defining an information code comprised in a set of information codes having a number equal to $2^{Nb+BA}$; said symbols (2) having a same duration interval T; said symbols comprising basic symbols (2), each one being defined by one of $2^{Nb-1}$ combinations of an up-chirp signal (3) of duration t1 followed by a down-chirp signal (4) of duration t2 or, vice versa, by one of $2^{Nb-1}$ combinations of a down-chirp signal (4) of duration t2 followed by an up-chirp signal (3) of said duration t1, and wherein, for each basic symbol, the sum of said duration t1 and said duration t2 is always equal to said duration interval T; each of said basic symbols representing one information codes belonging to a set of information codes equal to $2^{Nb}$, the remaining symbols of said symbols (2) being created as an extended constellation of symbols, introducing a frequency offset, preferably equal to k*BW/$2^{BA}$, with k=0,1, ..., $2^{BA}$-1, wherein BW indicates the bandwidth, while BA indicates the additional bits with respect to the Nb bits of the basic symbols ; wherein the operation of summing said frequency offset takes place by subtracting n*BW with n belonging to integers, so that the frequency is for each time instant within the interval of said frequency band BW; the unique association between each information code belonging to said set of information codes and a specific symbol (2) being determined a priori, by selecting for said symbol one of said two combinations, a specific ratio between said duration t1 and said duration interval T and said frequency offset, wherein each symbol (2) of said sequence of consecutive symbols (2) of said transmission signal (1) is independent of the symbols (2) preceding it and of the symbols (2) following it;

said demodulation providing, for each symbol (2) to be demodulated, belonging to said transmission signal (1), for:

- generating in parallel all the symbols representing the $2^{Nb+BA}$ information codes;
- calculating in parallel for each of said generated symbols the conjugate complex;
- multiplying in parallel said symbol (2) to be demodulated by said conjugate complex of each of said generated symbols;
- calculating in parallel the FFT of the result of each of said multiplications;
- analysing in parallel the results of said FFTs in order to identify the frequency bin with maximum amplitude for each of said FFT analyses;
- identifying the FFT analysis which shows among all said FFT analyses the frequency bin with greater amplitude;
- identifying as symbol (2) to be demodulated, the generated symbol that determined said frequency bin with greater amplitude among all the amplitudes of the frequency bins of all said FFT analyses.

**Patentansprüche**

1. Verfahren zum Modulieren eines Datenstroms, der durch eine Vielzahl von Bits eines Vielfachen einer vordefinierten Anzahl Nb definiert ist, um den besagten Datenstrom mittels eines Übertragungssignals (1) zu übertragen, **dadurch gekennzeichnet, dass** die besagte Modulation Folgendes vorsieht:

- Unterteilen der besagten Vielzahl von Bits des besagten Datenstroms in einen oder mehrere aufeinanderfolgende oder nicht aufeinanderfolgende Abschnitte von Bits, die jeweils eine Anzahl Nb von Bits umfassen, die in Bezug auf die übrigen Abschnitte von Bits eindeutig ist, wobei Nb so gewählt wird, dass sie mindestens 2 Bits beträgt, wobei jeder der besagten Abschnitte von Bits einen Informationscode definiert, der in einem Satz von Informationscodes mit einer Anzahl von $2^{Nb}$ enthalten ist;
- Erzeugen des besagten Übertragungssignals (1) als eine Folge aufeinanderfolgender Symbole (2), wobei jedes Symbol (2) einen der besagten Informationscodes darstellt, wobei die besagten Symbole (2) das gleiche Zeitintervall T aufweisen, wobei jedes der besagten Symbole (2) durch eine von $2^{Nb-1}$ Kombinationen eines Up-Chirp-Signals (3) mit der Dauer t1, gefolgt von einem Down-Chirp-Signal (4) mit der Dauer t2, oder umgekehrt durch eine von $2^{Nb-1}$ Kombinationen eines Down-Chirp-Signals (4) mit der Dauer t2, gefolgt von einem Up-Chirp-Signal (3) mit der besagten Dauer t1, definiert ist, und wobei für jedes Symbol (2) die Summe der besagten Dauer t1 und der besagten Dauer t2 immer gleich dem besagten Zeitintervall T ist, wobei die eindeutige Zuordnung zwischen jedem Informationscode, der zum besagten Satz von Informationscodes gehört, und einem spezifischen Symbol (2) vorab bestimmt wird, indem für das besagte Symbol eine der besagten beiden Kombinationen und ein spezifisches Verhältnis zwischen der besagten Dauer t1 und dem besagten Zeitintervall T gewählt werden, wobei jedes Symbol (2) der besagten Folge aufeinanderfolgender Symbole (2) des besagten Übertragungssignals (1) unabhängig von den ihm vorausgehenden Symbolen (2) und von den ihm nachfolgenden Symbolen (2) ist.

2. Verfahren zum Modulieren nach Patentanspruch 1, **dadurch gekennzeichnet, dass** die besagte Dauer t1 im Intervall [0; T] variieren kann und die besagte Dauer t2 so gewählt wird, dass t2 = T - t1 ist.

3. Verfahren zum Modulieren nach jeglichem der vorhergehenden Patentansprüche, **dadurch gekennzeichnet, dass** das Symbol (2), das vorab einem der besagten Informationscodes eindeutig zugeordnet wird, mit der einen oder der anderen der beiden Kombinationen basierend auf dem Wert eines der Bits des besagten Informationscodes definiert ist und der Wert der besagten Dauer t1 oder der besagten Dauer t2 gleich t = k*T/$2^{Nb-1}$ gewählt wird, wobei k=0, 1, ... , $2^{Nb-1}$ -1 ist, wobei der Wert k durch die Werte der Nb-1 Bits des besagten Informationscodes bestimmt wird, die sich vom besagten Bit, das zum Wählen einer der besagten beiden Kombinationen verwendet wird, unterscheiden.

4. Verfahren zum Modulieren nach jeglichem der vorhergehenden Patentansprüche, **dadurch gekennzeichnet, dass** die besagten Informationscodes nach der Gray-Codierung codiert sind.

5. Verfahren zum Modulieren nach jeglichem der vorhergehenden Patentansprüche, **dadurch gekennzeichnet, dass** für jedes der besagten Symbole (2):

- das besagte Up-Chirp-Signal (3) ein Signal ist, dessen Frequenz von einem minimalen Frequenzwert ($f_L$) zu einem maximalen Frequenzwert ($f_H$) einer vordefinierten Bandbreite (BW) linear zunimmt;
- das besagte Down-Chirp-Signal (4) ein Signal ist, dessen Frequenz vom besagten maximalen Frequenzwert ($f_H$) zum besagten minimalen Frequenzwert ($f_L$) der besagten vordefinierten Bandbreite (BW) linear abnimmt.

6. Verfahren zum Modulieren nach jeglichem der vorhergehenden Patentansprüche, **dadurch gekennzeichnet, dass** die besagte Modulation das Durchführen einer Phasenmodulation eines oder mehrerer der besagten Symbole (2) vorsieht.

7. Verfahren zum Modulieren nach jeglichem der vorhergehenden Patentansprüche, **dadurch gekennzeichnet, dass** die besagte Modulation ausgehend von einem Satz von Grundsymbolen der besagten Symbole (2), die jeweils einen der besagten Informationscodes darstellen, die zum besagten Satz von Informationscodes $2^{Nb}$ gehören, das Erzeugen einer erweiterten Konstellation von Symbolen der besagten Symbole (2) vorsieht, wobei eine Frequenzverschiebung eingeführt wird, die vorzugsweise gleich $k*BW/2^{BA}$ ist, wobei k=0, 1, ... , $2^{BA}$-1 ist, wobei BW die Bandbreite angibt, während BA die zusätzlichen Bits in Bezug auf die Nb Bits der Grundsymbole (2) angibt, und wobei BA größer oder gleich 1 gewählt wird; wobei der Vorgang des Summierens der besagten Frequenzverschiebung durch Subtrahieren von n*BW erfolgt, wobei n zu Ganzzahlen gehört, sodass die Frequenz zu jeder Zeit innerhalb des Intervalls des besagten Frequenzbands BW ist.

8. Verfahren zum Demodulieren eines Übertragungssignals (1), **dadurch gekennzeichnet, dass** das besagte Übertragungssignal (1) als eine Folge aufeinanderfolgender Symbole (2) erzeugt wird, wobei jedes Symbol (2) einen Abschnitt von Bits von einem oder mehreren aufeinanderfolgenden oder nicht aufeinanderfolgenden Abschnitten von Bits darstellt, in die eine Vielzahl von Bits eines Datenstroms unterteilt ist, wobei jeder der besagten Abschnitte von Bits eine Anzahl Nb von Bits umfasst, die in Bezug auf die übrigen Abschnitte von Bits eindeutig ist, wobei Nb so gewählt wird, dass sie mindestens 2 Bits beträgt, wobei jeder der besagten Abschnitte von Bits einen Informationscode definiert, der in einem Satz von Informationscodes mit einer Anzahl von $2^{Nb}$ enthalten ist; wobei die besagten Symbole (2) das gleiche Zeitintervall T aufweisen, wobei jedes der besagten Symbole (2) durch eine von $2^{Nb-1}$ Kombinationen eines Up-Chirp-Signals (3) mit der Dauer t1, gefolgt von einem Down-Chirp-Signal (4) mit der Dauer t2, oder umgekehrt durch eine von $2^{Nb-1}$ Kombinationen eines Down-Chirp-Signals (4) mit der Dauer t2, gefolgt von einem Up-Chirp-Signal (3) mit der besagten Dauer t1, definiert ist, und wobei für jedes Symbol (2) die Summe der besagten Dauer t1 und der besagten Dauer t2 immer gleich dem besagten Zeitintervall T ist, wobei die eindeutige Zuordnung zwischen jedem Informationscode, der zum besagten Satz von Informationscodes gehört, und einem spezifischen Symbol (2) vorab bestimmt wird, indem für das besagte Symbol eine der besagten beiden Kombinationen und ein spezifisches Verhältnis zwischen der besagten Dauer t1 und dem besagten Zeitintervall T gewählt werden, wobei jedes Symbol (2) der besagten Folge aufeinanderfolgender Symbole (2) des besagten Übertragungssignals (1) unabhängig von den ihm vorausgehenden Symbolen (2) und von den ihm nachfolgenden Symbolen (2) ist; wobei die besagte Demodulation für jedes zu demodulierende Symbol (2), das zum besagten Übertragungssymbol (1) gehört, Folgendes vorsieht:

- paralleles Erzeugen aller Symbole, die alle besagten übertragbaren Informationscodes $2^{Nb}$ darstellen;
- paralleles Berechnen des konjugierten Komplexes für jedes der besagten erzeugten Symbole;
- paralleles Multiplizieren des besagten, zu demodulierenden Symbols (2) mit dem besagten konjugierten Komplex jedes der besagten erzeugten Symbole;
- paralleles Bestimmen des Amplitudenwerts des resultierenden Signals für jeden der besagten Multiplikationsvorgänge;
- Identifizieren des erzeugten Symbols, das unter allen bestimmten Amplitudenwerten den höchsten Amplitudenwert bestimmt hat, als ein zu demodulierendes Symbol (2).

9. Verfahren zum Demodulieren eines Übertragungssignals (1), **dadurch gekennzeichnet, dass** das besagte Übertragungssignal (1) als eine Folge aufeinanderfolgender Symbole (2) erzeugt wird, wobei jedes Symbol (2) einen Abschnitt von Bits von einem oder mehreren aufeinanderfolgenden oder nicht aufeinanderfolgenden Abschnitten von Bits darstellt, in die eine Vielzahl von Bits eines Datenstroms unterteilt ist, wobei jeder der besagten Abschnitte von Bits eine Anzahl Nb von Bits umfasst, die in Bezug auf die übrigen Abschnitte von Bits eindeutig ist, wobei Nb so gewählt wird, dass sie mindestens 2 Bits beträgt, wobei jeder der besagten Abschnitte von Bits einen Informationscode definiert, der in einem Satz von Informationscodes mit einer Anzahl von $2^{Nb}$ enthalten ist; wobei die besagten Symbole (2) das gleiche Zeitintervall T aufweisen, wobei jedes der besagten Symbole (2) durch eine von $2^{Nb-1}$ Kombinationen eines Up-Chirp-Signals (3) mit der Dauer t1, gefolgt von einem Down-Chirp-Signal (4) mit der Dauer t2, oder umgekehrt durch eine von $2^{Nb-1}$ Kombinationen eines Down-Chirp-Signals (4) mit der Dauer t2, gefolgt von einem Up-Chirp-Signal (3) mit der besagten Dauer t1, definiert ist, und wobei für jedes Symbol (2) die Summe der besagten Dauer t1 und der besagten Dauer t2 immer gleich dem besagten Zeitintervall T ist, wobei die eindeutige Zuordnung zwischen jedem Informationscode, der zum besagten Satz von Informationscodes gehört, und einem spezifischen Symbol (2) vorab bestimmt wird, indem für das besagte Symbol eine der besagten beiden Kombinationen und ein spezifisches Verhältnis zwischen der besagten Dauer t1 und dem besagten Zeitintervall T gewählt werden, wobei jedes Symbol (2) der besagten Folge aufeinanderfolgender Symbole (2) des besagten Übertragungssignals (1) unabhängig von den ihm vorausgehenden Symbolen (2) und von den ihm nachfolgenden Symbolen (2) ist; wobei die besagte Demodulation für jedes zu demodulierende Symbol (2), das zum besagten Übertragungssymbol (1) gehört, Folgendes vorsieht: Unterteilen der besagten Nb Bits in mindestens eine erste Untergruppe von Nbps Bits, wobei Nbps größer als 0 und kleiner als Nb gewählt wird, und in eine zweite Untergruppe von Nbms = Nb - Nbps Bits, wobei die besagten Nbms Bits $2^{Nbms}$ Symbole mit einem minimalen quadratischen Abstand dazwischen definieren, wobei die besagte Demodulation ferner Folgendes vorsieht:

- paralleles Erzeugen erster Symbole, die die $2^{Nbps}$-Informationscodes, die sich voneinander unterscheiden, darstellen, unter allen Symbolen, die die besagten übertragbaren Informationscodes $2^{Nb}$ darstellen, wobei nur die Nbps Bits der besagten Nb Bits jedes der besagten Informationscodes berücksichtigt und variiert werden;
- paralleles Berechnen des konjugierten Komplexes für jedes der besagten ersten erzeugten Symbole;
- paralleles Multiplizieren des besagten, zu demodulierenden Symbols (2) mit dem besagten konjugierten Komplex jedes der besagten ersten erzeugten Symbole;
- paralleles Bestimmen des Amplitudenwerts des resultierenden Signals für jeden der besagten Multiplikationsvorgänge;
- Identifizieren, unter den besagten ersten erzeugten Symbolen, des Symbols, das unter allen bestimmten Amplitudenwerten den höchsten Amplitudenwert bestimmt hat, als wahrscheinliches, zu demodulierendes Symbol (2);
- paralleles Erzeugen zweiter Symbole, die alle Informationscodes $2^{Nbms}$ darstellen, die die Nbps Bits aufweisen, die dem besagten wahrscheinlichen, zu demodulierenden Symbol (2) entsprechen, wobei die besagte Erzeugung der besagten zweiten Symbole durchgeführt wird, indem nur die Nbms Bits unter den besagten Nb Bits von jedem der besagten Informationscodes berücksichtigt und variiert werden;
- paralleles Berechnen des konjugierten Komplexes für jedes der besagten zweiten erzeugten Symbole;
- paralleles Multiplizieren des besagten, zu demodulierenden Symbols (2) mit dem besagten konjugierten Komplex jedes der besagten zweiten erzeugten Symbole;
- paralleles Bestimmen des Amplitudenwerts des resultierenden Signals für jeden der besagten Multiplikationsvorgänge;
- Identifizieren, unter den besagten zweiten erzeugten Symbolen, des Symbols, das unter allen bestimmten Amplitudenwerten den höchsten Amplitudenwert bestimmt hat, als zu demodulierendes Symbol (2).

10. Verfahren nach jeglichem der Patentansprüche 8 oder 9, **dadurch gekennzeichnet, dass** für jedes zu demodulierende Symbol (2), das zum besagten Übertragungssignal (1) gehört, die besagte Demodulation für das besagte Symbol, das unter den besagten erzeugten Symbolen als übertragenes Symbol identifiziert wird, Folgendes vorsieht:

- Multiplizieren des besagten, zu demodulierenden Symbols (2) mit dem konjugierten Komplex des besagten identifizierten Symbols;
- Berechnen der FFT des Ergebnisses der besagten Multiplikation;
- Analysieren des Ergebnisses der besagten FFT, um den Frequenzbereich mit maximaler Amplitude zu identifizieren;
- Berücksichtigen der Frequenz des besagten identifizierten Bereichs als die Frequenzverschiebung des besagten, zu demodulierenden Symbols (2).

11. Verfahren nach jeglichem der Patentansprüche 8 bis 10, **dadurch gekennzeichnet, dass** für jedes zu demodulierende Symbol (2), das zum besagten Übertragungssignal (1) gehört, die besagte Demodulation für das besagte Symbol, das unter den besagten erzeugten Symbolen als übertragenes Symbol identifiziert wird, Folgendes vorsieht:

- Erhalten von mindestens einem Symbol, das in Bezug auf das besagte, zu demodulierende Symbol (2) durch Anwenden einer Zeitverzögerung verzögert wird;

- Multiplizieren des besagten, zu demodulierenden Symbol (2) und des besagten verzögerten Symbols mit dem konjugierten Komplex des besagten identifizierten Symbols;
- Bestimmen des Amplitudenwerts des resultierenden Signals für jeden der besagten Multiplikationsvorgänge;
- Identifizieren der Verschiebung im Zeitverlauf des besagten, zu demodulierenden Symbols (2) auf der Grundlage des von den besagten Multiplikationen resultierenden Signals, das den höchsten Amplitudenwert aufweist.

12. Verfahren zum Demodulieren eines Übertragungssignals (1), **dadurch gekennzeichnet, dass** das besagte Übertragungssignal (1) als eine Folge aufeinanderfolgender Symbole (2) erzeugt wird, wobei jedes Symbol (2) einen Abschnitt von Bits von einem oder mehreren aufeinanderfolgenden oder nicht aufeinanderfolgenden Abschnitten von Bits darstellt, in welche eine Vielzahl von Bits eines Datenstroms unterteilt ist, wobei jeder der besagten Abschnitte von Bits eine Anzahl Nb + BA Bits umfasst, die in Bezug auf die übrigen Abschnitte von Bits eindeutig ist, wobei Nb so gewählt wird, dass sie mindestens 2 Bits beträgt und wobei BA größer oder gleich 1 gewählt wird, wobei jeder der besagten Abschnitte von Bits einen Informationscode definiert, der in einem Satz von Informationscodes mit einer Anzahl von $2^{Nb+BA}$ enthalten ist; wobei die besagten Symbole (2) das gleiche Zeitintervall T aufweisen; wobei die besagten Symbole Grundsymbole (2) umfassen, wobei jedes davon durch eine von $2^{Nb-1}$ Kombinationen eines Up-Chirp-Signals (3) mit der Dauer t1, gefolgt von einem Down-Chirp-Signal (4) mit der Dauer t2, oder umgekehrt durch eine von $2^{Nb-1}$ Kombinationen eines Down-Chirp-Signals (4) mit der Dauer t2, gefolgt von einem Up-Chirp-Signal (3) mit der besagten Dauer t1, definiert ist, und wobei für jedes Grundsymbol die Summe der besagten Dauer t1 und der besagten Dauer t2 immer gleich dem besagten Zeitintervall T ist; wobei jedes der besagten Grundsymbole einen Informationscode darstellt, der zu einem Satz von Informationscodes gehört, der gleich $2^{Nb}$ ist, wobei die übrigen Symbole der besagten Symbole (2) als erweiterte Konstellation von Symbolen erstellt werden, wobei eine Frequenzverschiebung eingeführt wird, die vorzugsweise gleich $k*BW/2^{BA}$ ist, wobei k=0, 1, ... , $2^{BA}-1$ ist, wobei BW die Bandbreite angibt, während BA die zusätzlichen Bits in Bezug auf die Nb Bits der Grundsymbole angibt; wobei der Vorgang des Summierens der besagten Frequenzverschiebung durch Subtrahieren von n*BW erfolgt, wobei n zu Ganzzahlen gehört, sodass die Frequenz zu jeder Zeit innerhalb des Intervalls des besagten Frequenzbandes BW ist; wobei die eindeutige Zuordnung zwischen jedem Informationscode, der zum besagten Satz von Informationscodes gehört, und einem spezifischen Symbol (2) vorab bestimmt wird, indem für das besagte Symbol eine der besagten beiden Kombinationen, ein spezifisches Verhältnis zwischen der besagten Dauer t1 und dem besagten Zeitintervall T und die besagte Frequenzverschiebung gewählt werden, wobei jedes Symbol (2) der besagten Folge aufeinanderfolgender Symbole (2) des besagten Übertragungssignals (1) unabhängig von den ihm vorausgehenden Symbolen (2) und von den ihm folgenden Symbolen (2) ist;

wobei die besagte Demodulation für jedes zu demodulierende Symbol (2), das zum besagten Übertragungssignal (1) gehört, Folgendes vorsieht:

- paralleles Erzeugen aller Symbole, die die $2^{Nb+BA}$ Informationscodes darstellen;
- paralleles Berechnen des konjugierten Komplexes für jedes der besagten erzeugten Symbole;
- paralleles Multiplizieren des besagten, zu demodulierenden Symbols (2) mit dem besagten konjugierten Komplex jedes der besagten erzeugten Symbole;
- paralleles Berechnen der FFT des Ergebnisses jeder der besagten Multiplikationen;
- paralleles Analysieren der Ergebnisse der besagten FFTs, um den Frequenzbereich mit maximaler Amplitude für jede der besagten FFT-Analysen zu identifizieren;
- Identifizieren der FFT-Analyse, die unter allen besagten FFT-Analysen den Frequenzbereich mit größter Amplitude zeigt;
- Identifizieren des erzeugten Symbols, das unter allen Amplituden der Frequenzbereiche von allen besagten FFT-Analysen den besagten Frequenzbereich mit größter Amplitude bestimmt hat, als zu demodulierendes Symbol (2).

**Revendications**

1. Procédé de modulation d'un flux de données défini par une pluralité de bits d'un nombre multiple d'un nombre Nb prédéfini, pour transmettre ledit flux de données au moyen d'un signal de transmission (1), **caractérisé en ce que** ladite modulation prévoit:

- la subdivision de ladite pluralité de bits dudit flux de données en une ou plusieurs portions de bits consécutives ou non consécutives, chacune comprenant un nombre Nb de bits, uniques par rapport aux portions de bits restantes, où Nb est choisi pour être au moins égal à 2 bits, chacune desdites portions de bits définissant un code d'information compris dans un ensemble de codes d'information dont le nombre est égal à $2^{Nb}$;

- la génération dudit signal de transmission (1) sous la forme d'une séquence de symboles consécutifs (2), chaque symbole (2) représentant l'un desdits codes d'information, lesdits symboles (2) ayant un même intervalle de durée T, chacun desdits symboles (2) étant défini par l'une des combinaisons $2^{Nb-1}$ d'un signal up-chirp (3) de durée t1 suivi d'un signal down-chirp (4) de durée t2 ou, inversement, par l'une des combinaisons $2^{Nb-1}$ d'un signal down-chirp (4) de durée t2 suivi d'un signal up-chirp (3) de ladite durée t1, et où, pour chaque symbole (2), la somme de ladite durée t1 et de ladite durée t2 est toujours égale audit intervalle de durée T, l'association unique entre chaque code d'information appartenant audit ensemble de codes d'information et un symbole spécifique (2) étant déterminée a priori, en sélectionnant pour ledit symbole l'une desdites deux combinaisons et un rapport spécifique entre ladite durée t1 et ledit intervalle de durée T, où chaque symbole (2) de ladite séquence de symboles consécutifs (2) dudit signal de transmission (1) est indépendant des symboles (2) qui le précèdent et des symboles (2) qui le suivent.

2. Procédé de modulation selon la revendication 1, **caractérisé en ce que** ladite durée t1 peut varier dans l'intervalle [0; T] et que ladite durée t2 est choisie de telle sorte que t2 = T - t1.

3. Procédé de modulation selon l'une quelconque des revendications précédentes, **caractérisé en ce que** le symbole (2) associé a priori de manière unique à l'un desdits codes d'information est défini avec l'une ou l'autre des deux combinaisons en fonction de la valeur d'un des bits dudit code d'information et la valeur de ladite durée t1 ou de ladite durée t2 est choisie égale à t = k*T/$2^{Nb-1}$ avec k=0, 1, ... , $2^{Nb-1}$ -1, où la valeur de k est déterminée par les valeurs des Nb-1 bits du code d'information susmentionné, qui sont distincts dudit bit utilisé pour sélectionner l'une desdites deux combinaisons.

4. Procédé de modulation selon l'une quelconque des revendications précédentes, **caractérisé en ce que** lesdits codes d'information sont codés selon le code de Gray.

5. Procédé de modulation selon l'une quelconque des revendications précédentes, **caractérisé en ce que,** pour chacun desdits symboles (2):

   - ledit signal up-chirp (3) est un signal dont la fréquence augmente linéairement d'une valeur de fréquence minimale ($f_L$) à une valeur de fréquence maximale ($f_H$) d'une largeur de bande prédéfinie (BW);
   - ledit signal down-chirp (4) est un signal dont la fréquence décroît linéairement de ladite valeur de fréquence maximale ($f_H$) à ladite valeur de fréquence minimale ($f_L$) de ladite largeur de bande prédéfinie (BW).

6. Procédé de modulation selon l'une quelconque des revendications précédentes, **caractérisé en ce que** ladite modulation prévoit d'effectuer une modulation de phase d'un ou plusieurs desdits symboles (2).

7. Procédé de modulation selon l'une quelconque des revendications précédentes, **caractérisé en ce que** ladite modulation, à partir d'un ensemble de symboles de base desdits symboles (2), chacun représentant un desdits codes d'information appartenant audit ensemble de codes d'information $2^{Nb}$, prévoit de créer une constellation étendue de symboles desdits symboles (2), en introduisant un décalage de fréquence, de préférence égal à k*BW/$2^{BA}$, avec k=0, 1, ... , $2^{BA}$-1, où BW indique la largeur de bande, tandis que BA indique les bits supplémentaires par rapport aux Nb bits des symboles de base (2), et où BA est choisi supérieur ou égal à 1; où l'opération de sommation dudit décalage de fréquence s'effectue en soustrayant n*BW, avec n appartenant à des nombres entiers, de sorte que la fréquence est pour chaque instant de temps dans l'intervalle de ladite bande de fréquence BW.

8. Procédé de démodulation d'un signal de transmission (1), **caractérisé en ce que** ledit signal de transmission (1) est généré comme une séquence de symboles consécutifs (2), chaque symbole (2) représentant une portion de bits d'une ou plusieurs portions de bits consécutives ou non consécutives dans lesquelles une pluralité de bits d'un flux de données est divisée, chacune desdites portions de bits comprenant un nombre Nb de bits, uniques par rapport aux portions de bits restantes, où Nb est choisi pour être au moins égal à 2 bits, chacune desdites portions de bits définissant un code d'information compris dans un ensemble de codes d'information dont le nombre est égal à $2^{Nb}$; lesdits symboles (2) ayant un même intervalle de durée T, chacun desdits symboles (2) étant défini par l'une des combinaisons $2^{Nb-1}$ d'un signal up-chirp (3) de durée t1 suivi d'un signal down-chirp (4) de durée t2 ou, inversement, par l'une des combinaisons $2^{Nb-1}$ d'un signal down-chirp (4) de durée t2 suivi d'un signal up-chirp (3) de ladite durée t1, et où, pour chaque symbole (2), la somme de ladite durée t1 et de ladite durée t2 est toujours égale audit intervalle de durée T, l'association unique entre chaque code d'information appartenant audit ensemble de codes d'information et un symbole spécifique (2) étant déterminée a priori, en sélectionnant pour ledit symbole l'une desdites deux combinaisons et un rapport spécifique entre ladite durée t1 et ledit intervalle de durée T, où chaque symbole (2) de ladite séquence de symboles consécutifs (2) dudit signal de transmission (1) est indépendant des symboles (2) qui le précèdent et des symboles (2) qui le suivent; où ladite démodulation, pour chaque symbole (2) à démoduler, appartenant audit signal de transmission (1), prévoit:

- la génération en parallèle de tous les symboles représentant tous lesdits codes d'information transmissibles $2^{Nb}$;
- le calcul en parallèle, pour chacun desdits symboles générés, du complexe conjugué;
- la multiplication en parallèle dudit symbole (2) à démoduler par ledit complexe conjugué de chacun desdits symboles générés;
- la détermination en parallèle, pour chacune desdites opérations de multiplication, de la valeur de l'amplitude du signal résultant;
- l'identification, en tant que symbole (2) à démoduler, du symbole généré qui a déterminé la valeur d'amplitude la plus élevée parmi toutes les valeurs d'amplitude déterminées.

**9.** Procédé de démodulation d'un signal de transmission (1 ), **caractérisé en ce que** ledit signal de transmission (1) est généré comme une séquence de symboles consécutifs (2), chaque symbole (2) représentant une portion de bits d'une ou plusieurs portions de bits consécutives ou non consécutives dans lesquelles une pluralité de bits d'un flux de données est divisée, chacune desdites portions de bits comprenant un nombre Nb de bits, uniques par rapport aux portions de bits restantes, où Nb est choisi pour être au moins égal à 2 bits, chacune desdites portions de bits définissant un code d'information compris dans un ensemble de codes d'information dont le nombre est égal à $2^{Nb}$; lesdits symboles (2) ayant un même intervalle de durée T, chacun desdits symboles (2) étant défini par l'une des combinaisons $2^{Nb-1}$ d'un signal up-chirp (3) de durée t1 suivi d'un signal down-chirp (4) de durée t2 ou, inversement, par l'une des combinaisons $2^{Nb-1}$ d'un signal down-chirp (4) de durée t2 suivi d'un signal up-chirp (3) de ladite durée t1, et où, pour chaque symbole (2), la somme de ladite durée t1 et de ladite durée t2 est toujours égale audit intervalle de durée T, l'association unique entre chaque code d'information appartenant audit ensemble de codes d'information et un symbole spécifique (2) étant déterminée a priori, en sélectionnant pour ledit symbole l'une desdites deux combinaisons et un rapport spécifique entre ladite durée t1 et ledit intervalle de durée T, où chaque symbole (2) de ladite séquence de symboles consécutifs (2) dudit signal de transmission (1) est indépendant des symboles (2) qui le précèdent et des symboles (2) qui le suivent; où ladite démodulation, pour chaque symbole (2) à démoduler, appartenant audit signal de transmission (1), prévoit de diviser lesdits Nb bits en au moins un premier sous-groupe de Nbps bits, où Nbps est choisi supérieur à 0 et inférieur à Nb, et un deuxième sous-groupe de bits Nbms = Nb - Nbps, où lesdits bits Nbms définissent des symboles $2^{Nbms}$ ayant une distance carrée minimale entre eux, ladite démodulation prévoyant également:

- la génération en parallèle, parmi tous les symboles représentant lesdits codes d'information transmissibles $2^{Nb}$, de premiers symboles représentant les codes d'information $2^{Nbps}$ distincts les uns des autres, en considérant et en faisant varier uniquement les Nbps bits desdits Nb bits de chacun desdits codes d'information;
- le calcul en parallèle, pour chacun desdits premiers symboles générés, du complexe conjugué;
- la multiplication en parallèle dudit symbole (2) à démoduler par ledit complexe conjugué de chacun desdits premiers symboles générés;
- la détermination en parallèle, pour chacune desdites opérations de multiplication, de la valeur de l'amplitude du signal résultant;
- l'identification, en tant que symbole probable (2) à démoduler, du symbole parmi lesdits premiers symboles générés, qui a déterminé la valeur d'amplitude la plus élevée parmi toutes les valeurs d'amplitude déterminées;
- la génération en parallèle des deuxièmes symboles représentant tous les codes d'information $2^{Nbms}$ ayant les Nbps bits correspondant audit symbole probable (2) à démoduler, ladite génération desdits deuxièmes symboles étant effectuée en considérant et en faisant varier uniquement les Nbms bits parmi lesdits Nb bits de chacun desdits codes d'information;
- le calcul en parallèle, pour chacun desdits deuxièmes symboles générés, du complexe conjugué;
- la multiplication en parallèle dudit symbole (2) à démoduler par ledit complexe conjugué de chacun desdits deuxièmes symboles générés;
- la détermination en parallèle, pour chacune desdites opérations de multiplication, de la valeur de l'amplitude du signal résultant;
- l'identification, en tant que symbole (2) à démoduler, du symbole parmi lesdits deuxièmes symboles générés, qui a déterminé la valeur d'amplitude la plus élevée parmi toutes les valeurs d'amplitude déterminées.

**10.** Procédé selon l'une quelconque des revendications 8 ou 9, **caractérisé en ce que** ladite démodulation, pour chaque symbole (2) à démoduler, appartenant audit signal de transmission (1), pour ledit symbole identifié en tant que symbole transmis, parmi lesdits symboles générés, prévoit:

- la multiplication dudit symbole (2) à démoduler par le complexe conjugué dudit symbole identifié;
- le calcul de la FFT du résultat de ladite multiplication;
- l'analyse du résultat de ladite FFT afin d'identifier le bin de fréquence ayant l'amplitude maximale;
- la considération de la fréquence dudit bin identifié comme le décalage de fréquence dudit symbole (2) à démoduler.

**11.** Procédé selon l'une quelconque des revendications 8 à 10, **caractérisé en ce que** ladite démodulation, pour chaque symbole (2) à démoduler, appartenant audit signal de transmission (1), pour ledit symbole identifié en tant que symbole transmis, parmi lesdits symboles générés, prévoit:

- l'obtention d'au moins un symbole retardé par rapport audit symbole (2) à démoduler en appliquant un retard temporel;
- la multiplication de chacun dudit symbole (2) à démoduler et dudit symbole retardé par le complexe conjugué dudit symbole identifié;
- la détermination pour chacune desdites opérations de multiplication de la valeur d'amplitude du signal résultant;
- l'identification du décalage dans le temps dudit symbole (2) à démoduler sur la base duquel le signal résultant desdites multiplications présente la valeur d'amplitude la plus élevée.

**12.** Procédé de démodulation d'un signal de transmission (1), **caractérisé en ce que** ledit signal de transmission (1) est généré comme une séquence de symboles consécutifs (2), chaque symbole (2) représentant une portion de bits d'une ou plusieurs portions de bits consécutives ou non consécutives dans lesquelles une pluralité de bits d'un flux de données est divisée, chacune desdites portions de bits comprenant un nombre Nb + BA de bits, uniques par rapport aux portions de bits restantes, où Nb est choisi pour être au moins égal à 2 bits et où BA est choisi supérieur ou égal à 1, chacune desdites portions de bits définissant un code d'information compris dans un ensemble de codes d'information dont le nombre est égal à $2^{Nb+BA}$; lesdits symboles (2) ayant un même intervalle de durée T; lesdits symboles comprenant des symboles de base (2), chacun étant défini par l'une des combinaisons $2^{Nb-1}$ d'un signal up-chirp (3) de durée t1 suivi d'un signal down-chirp (4) de durée t2 ou, inversement, par l'une des combinaisons $2^{Nb-1}$ d'un signal down-chirp (4) de durée t2 suivi d'un signal up-chirp (3) de ladite durée t1, et où, pour chaque symbole de base, la somme de ladite durée t1 et de ladite durée t2 est toujours égale audit intervalle de durée T; chacun desdits symboles de base représentant un code d'information appartenant à un ensemble de codes d'information égal à $2^{Nb}$, les symboles restants desdits symboles (2) étant créés comme une constellation étendue de symboles, introduisant un décalage de fréquence, de préférence égal à $k*BW/2^{BA}$, avec k=0, 1, ... , $2^{BA}-1$, où BW indique la largeur de bande, tandis que BA indique les bits supplémentaires par rapport aux Nb bits des symboles de base; où l'opération consistant à additionner ledit décalage de fréquence s'effectue en soustrayant n*BW, avec n appartenant à des nombres entiers, de sorte que la fréquence se situe pour chaque instant dans l'intervalle de ladite bande de fréquence BW; l'association unique entre chaque code d'information appartenant audit ensemble de codes d'information et un symbole spécifique (2) étant déterminée a priori, en sélectionnant pour ledit symbole l'une desdites deux combinaisons, un rapport spécifique entre ladite durée t1 et ledit intervalle de durée T et ledit décalage de fréquence, où chaque symbole (2) de ladite séquence de symboles consécutifs (2) dudit signal de transmission (1) est indépendant des symboles (2) qui le précèdent et des symboles (2) qui le suivent;

ladite démodulation, pour chaque symbole (2) à démoduler, appartenant audit signal de transmission (1) prévoyant:

- la génération en parallèle de tous les symboles représentant les codes d'information $2^{Nb+BA}$;
- le calcul en parallèle, pour chacun desdits symboles générés, du complexe conjugué;
- la multiplication en parallèle dudit symbole (2) à démoduler par ledit complexe conjugué de chacun desdits symboles générés;
- le calcul en parallèle de la FFT du résultat de chacune desdites multiplications;
- l'analyse en parallèle des résultats desdites FFT afin d'identifier le bin de fréquence ayant l'amplitude maximale pour chacune desdites analyses FFT;
- l'identification de l'analyse FFT qui montre, parmi toutes lesdites analyses FFT, le bin de fréquence ayant la plus grande amplitude;
- l'identification, en tant que symbole (2) à démoduler, du symbole généré qui a déterminé ledit bin de fréquence avec la plus grande amplitude parmi toutes les amplitudes des bins de fréquence de toutes lesdites analyses FFT.

Fig.1

Fig.2

Fig.3

Fig.4

Fig.5

Fig.6

Fig.8

Fig.7

Fig.9

Fig.10

Fig.11

Fig.12

Fig.13

**EP 4 064 577 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8406275 B2
- US 10955547 B2